**Europäisches Patentamt**

**European Patent Office**

**Office européen des brevets**

(19)

(11) **EP 1 339 077 A2**

(12) # EUROPEAN PATENT APPLICATION

(43) Date of publication:
**27.08.2003 Bulletin 2003/35**

(51) Int Cl.7: **H01G 9/008**

(21) Application number: **03000083.0**

(22) Date of filing: **08.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **20.02.2002 JP 2002042509**

(71) Applicant: **Hitachi, Ltd.**
**Chiyoda-ku, Tokyo 101-8010 (JP)**

(72) Inventors:
• **Mishima, Akira**
**Mito-shi, Ibaraki 310-0062 (JP)**
• **Shirakawa, Shinji**
**Hitachi-shi, Ibaraki 316-0036 (JP)**
• **Mashino, Keiichi**
**Hitachinaka-shi, Ibaraki 312-0014 (JP)**
• **Innami, Toshiyuki**
**Mito-shi, Ibaraki 310-0851 (JP)**

(74) Representative: **Beetz & Partner Patentanwälte**
**Steinsdorfstrasse 10**
**80538 München (DE)**

(54) **Capacitor for low voltage**

(57)     The invention intends to reduce the inductance of wirings for connecting an electrolytic capacitor for use in a low-voltage electric device, and realizes to suppress the surge voltage and improve the frequency response. For a low-voltage electrolytic capacitor, the anode and cathode electrode terminals (2) are placed to come close, and broad parallel plates (4) are used for the wirings connecting to the electric device (3), so that the to-and-fro currents overlap in an area of the power wirings near the electrolytic capacitor, thereby reducing the inductance of the wiring parts to a large extent.

## FIG.1A

EP 1 339 077 A2

**Description**

Background of the Invention

The present invention relates to an electric device that requires high power consumption with a comparatively low voltage, such as a battery driven motor. The invention allows to suppress the surge voltage during switching by lowering the wiring inductance in the connection device of a capacitor, enabling to use low-loss high-efficient semiconductor devices with low-withstand voltage to thereby achieve a small-sized low-cost and high-performance electric device.

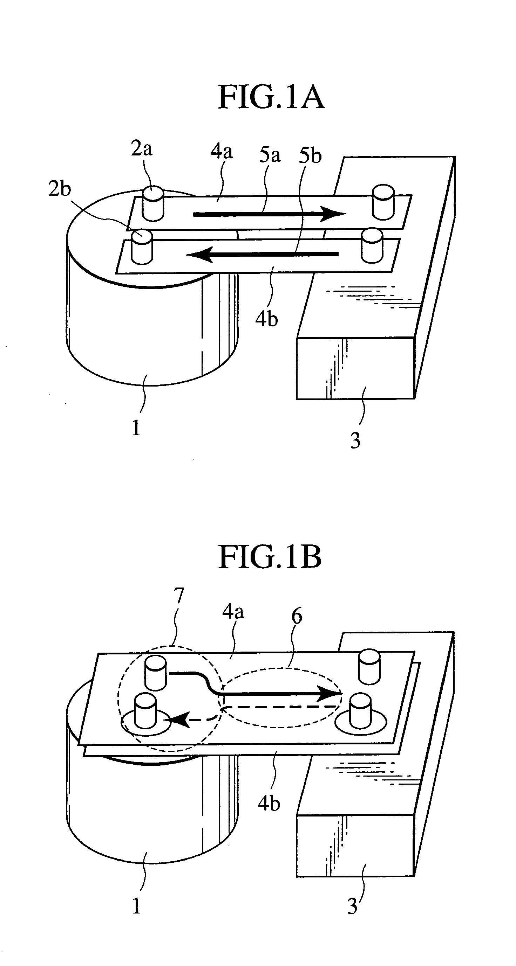

A method of improving the frequency response of an electrolytic capacitor connected to an electric device and suppressing the surge voltage has been discussed, for example, in Japanese Patent Laid-open No. Hei 6-275476. The method takes on the following construction illustrated in Figs. 1A and 1B of the specification. In the method, tabs for taking out an anode lead and a cathode lead, which are installed on the upper part of a capacitor element made up with laminated plates, are separately tied up in a bundle and attached each to integrated leads. The integrated leads are coupled to external connection terminals through anode and cathode connection terminals for connecting to a sealing plate to seal the case. In this case, to form the integrated leads and the anode and cathode connection terminals into parallel broad plates will achieve a sufficient lowering of the internal inductance inside the case of the electrolytic capacitor.

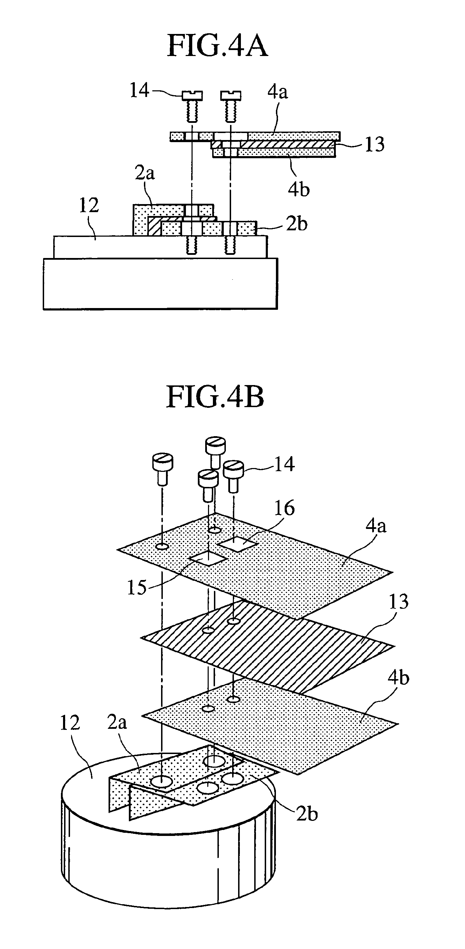

As the second example, a method is discussed in the document "New Aluminum Electrolytic Capacitors With Low Inductance Allow Advanced Frequency Converter Design" Jurgen Roumen PCIM 2000 (2000). As illustrated in Fig. 4 in the above document, the method attaches multiple folder tabs to each of the anode foil and the cathode foil, thereafter houses the winding made by lap winding in the case, and connects the folder tabs to the electrode terminals mounted on the sealing plate. In this case, a sufficient spacing is required between the anode and cathode of the electrode terminals to secure insulation against a high voltage. As the conventional one illustrated on the left in Fig. 4, the spacing between the parts attached to the anode foil and cathode foil of the folder tabs is widely set, and the length of the connection devices extended to the upper electrode terminals is also set long. As the improved one illustrated on the right in Fig. 4 in the document, the spacing between the parts attached to the anode foil and cathode foil of the folder tabs is narrowed, and the length of the connection devices extended to the upper electrode terminals is shortened, thus achieving remarkably reduced inductance.

The total inductance that dominates generation of a surge voltage and a frequency response is the sum of the three components as follows.

Total inductance

= Inductance inside a capacitor

+ Inductance of the power wiring for connecting the capacitor to an electric device

+ Inductance inside the electric device

The above examples 1 and 2 introduced in the related art are the invention relating to the lowering of the inductance inside the capacitor in the first term on the right side of the above expression. For the reduction of the inductance inside the electric device in the third term there have been various inventions related to individual electric devices. However, these conventional techniques cannot lower the inductance of the power wiring for connecting the capacitor to the electric device in the second term of the above expression, which is a limit in regard to improving the frequency response and suppressing the surge voltage.

Summary of the Invention

The present invention has been made in view of the above circumstances, and the invention intends to realize the reduction of the total inductance for the use of a low-voltage device by greatly reducing the inductance of the power wiring parts that connect an electrolytic capacitor to an electric device in order to improve the frequency response and suppress the surge voltage of the electric device. Further it is an object of the invention to allow the use of low-loss high-efficient semiconductor devices with a low-withstand voltage, thereby providing a small-sized low-cost and high-performance electric device.

In order to solve the problem, in regard to the low-voltage device, by utilizing the property that to shorten a distance between the anode and cathode of the external terminals placed on the outside of an electrolytic capacitor will not generate the dielectric breakdown, the terminals are placed close to the external terminals of the case. And, for the power wirings that connect an electric device to the electrolytic capacitor is used a laminated wiring in which two broad flat plates with an insulating layer sandwiched in-between are overlapped. Being placed in proximity to the external terminals of the case, the laminated wiring increases the suppression effect of inductance to a great extent, thus achieving the reduction of inductance of the power wiring parts.

Brief Description of the Drawings

Other objects and advantages of the invention will become apparent from the following description of embodiments with reference to the accompanying drawings in which:

Figs. 1A and 1B illustrate an overlapping effect of to-and-fro currents in the power wiring parts, which is the effect of the present invention;
Figs. 2A and 2B illustrate a state that a difference of the distance between the terminals creates a difference in the overlapping effect of to-and-fro currents in the power wiring parts, as the effect of the invention;
Fig. 3 illustrates the overlapping effect of a current by two capacitors arranged in parallel in reverse polarity, as the effect of the invention;
Figs. 4A and 4B illustrate a second embodiment of the invention;
Figs. 5A to 5C illustrate a third embodiment of the invention;
Fig. 6 illustrates a fourth embodiment of the invention;
Figs. 7A and 7B illustrate a fifth embodiment of the invention;
Figs. 8A to 8C illustrate a sixth embodiment of the invention;
Fig. 9 illustrates a seventh embodiment of the invention;
Fig. 10 illustrates an eighth embodiment of the invention; and
Fig. 11 illustrates a ninth embodiment of the invention.

Description of the Preferred Embodiments

First Embodiment

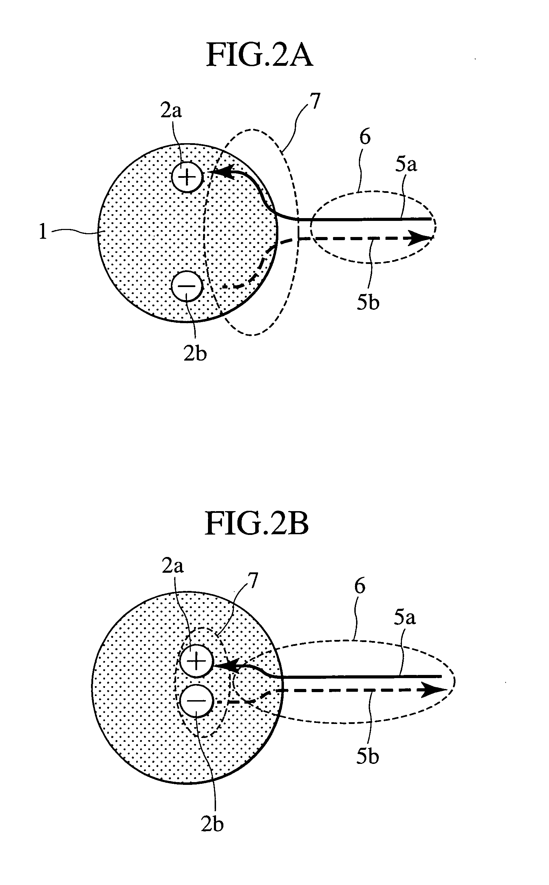

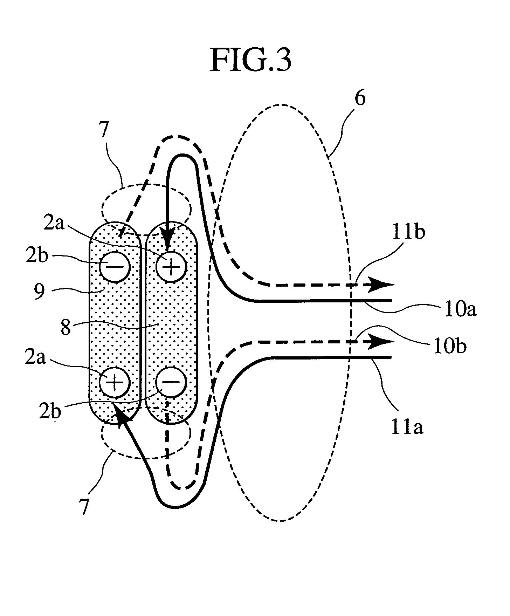

The basic construction common to a first embodiment of this invention will be described with the accompanying drawings. Fig. 1A and Fig. 1B comparably illustrate two types of power wirings that connect electrolytic capacitors to electric devices. In Fig. 1A, an anode electrode terminal 2a and a cathode electrode terminal 2b that are attached to a case 1 of an electrolytic capacitor are connected to an electric device 3 by means of a power wiring 4a on the anode side and a power wiring 4b on the cathode side. The power wirings 4a and 4b are made of narrow conductive plates, and are arranged in parallel with a spacing substantially equal to the distance between the electrode terminals 2a and 2b. Because of this construction, a charge/discharge current 5a of the capacitor that flows through the power wiring 4a on the anode side and a charge/discharge current 5b of the capacitor that flows through the power wiring 4b on the cathode side do not have an overlapped area. Accordingly, the to-and-fro currents (5a, 5b) induces a strong magnetic field in the surrounding space, whereby the power wirings 4a, 4b will possess large wiring inductances.
In contrast to this, this embodiment adopts a method as illustrated in Fig. 1B as a measure to reduce the inductance. Both the power wiring 4a on the anode side and the power wiring 4b on the cathode side employ wide conductive plates, and both plates are arranged in parallel to overlap each other. Because of this construction, the currents 5a and 5b flowing through the power wirings come close and overlap each other in a middle area 6 between the electric device 3 and the case 1 of the electrolytic capacitor, which suppresses the magnetic field induced on the surrounding space almost to zero, thus reducing the inductance.
In order to further reduce the inductance, an area 7 near the electrolytic capacitor of the power wirings 4a, 4b needs to be small. For this purpose, the electrode terminals 2a and 2b are arranged to come close as illustrated in Fig 2A. Thus, the area 7 where the currents does not overlap is made small in comparison to the case in Fig. 2A, which will reduce the inductance of the power wirings to a great extent. Alternatively, as shown in Fig. 3, a first capacitor 8 and a second capacitor 9 of a small capacitance are arranged adjacently with the anode electrode terminal 2a and the cathode electrode terminal 2b put in reverse polarity. Here, the capacitances of the two capacitors 8, 9 are set equal. Then, currents 10a, 10b flowing through the first capacitor 8 and currents 11a, 11b flowing through the second capacitor 9 overlap each other, and the magnitudes of the currents become equal with reverse directions each other, so that the inductance can be reduced. Generally, in case of two or more capacitors but even number thereof, to arrange two capacitors of an equal capacitance in a pair of reverse polarity will attain the above effect.
In case of a high-voltage electric device, there is a restriction to reducing the spacing between the anode electrode terminal 2a and the cathode electrode terminal 2b in order to secure insulation. However, since a corona discharge does not occur in case of a low-voltage electric device for use in 390 volts or more, only securing the creeping distance will make it possible to bring the anode terminal and the cathode terminal close, thereby reducing the inductance.

Second Embodiment

A second embodiment of this invention will be described with Figs. **4A** and **4B**. Referring to Fig. **4A**, on the upper surface of a sealing plate 12 of an electrolytic capacitor are mounted an anode electrode terminal 2a and a cathode electrode terminal 2b of L-letter shaped plate. In the connection with an electric device 3, a broad plate-formed anode power wiring 4a and a cathode power wiring 4b are used so as to sandwich an insulating sheet 13 in-between. The power wirings **4a**, **4b** are fastened to the electrode terminals 2a, 2b with screws 14. Accordingly, as shown in Fig. **4B**, screw-fitting holes 15 are pierced in the electrode terminals 2a, 2b, and window holes 16 are bored so as to prevent the screws **14** used for mounting the power wiring 4b of one pole from contacting with the power wiring 4a of the other pole. Owing to such a construction, the anode electrode terminal 2a is connected only to the anode power wiring 4a, and the cathode electrode terminal 2b is connected only to the cathode power wiring 4b; since the running currents overlap in all the areas on the power wirings, a remarkable reduction of the inductance of the power wiring 4 is possible. In this embodiment, it is possible to expand the degree of bringing the electrode terminals 2 close, in comparison with the case of the long cylindrical electrode terminals as illustrated in Fig. 2B. In case of Fig. 2B, a high current has to be flown through the long cylindrical electrode terminals, and the diameter of the electrode was needed to be sufficiently large to prevent increase of the current density. This gave a limit to placing the electrode terminals 2 adjacently. However, since the first embodiment employs broad conductive plates for the electrode terminals, it is possible to prevent increase of the current density in the electrode terminals, and to decrease the thickness of the conductive plates. Therefore, it is possible to place the electrode terminals sufficiently close.

Third Embodiment

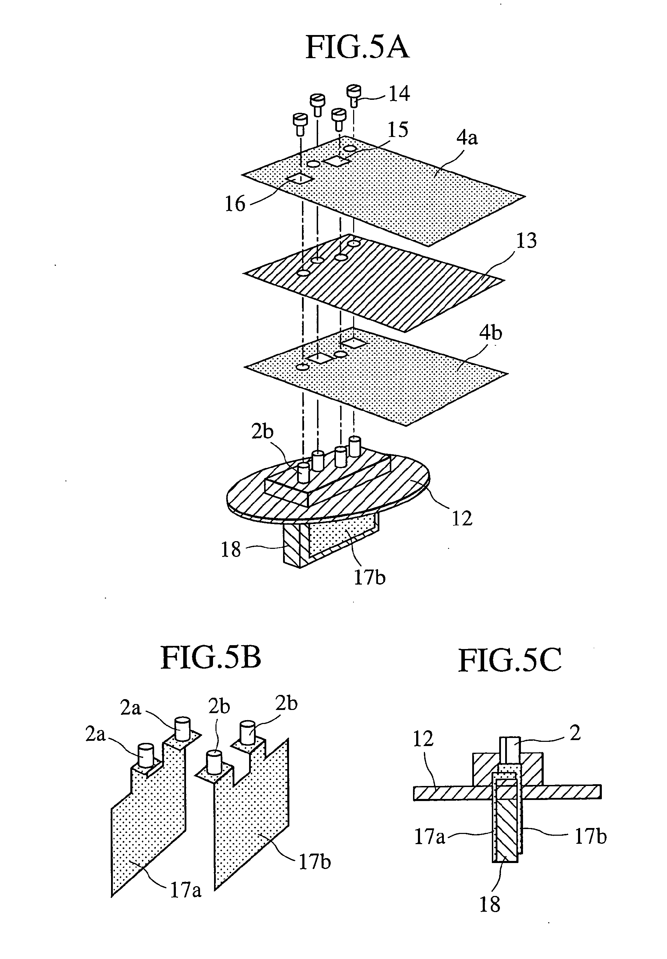

A third embodiment of this invention will be described with Figs. 5A to 5C. Referring to Figs. 5A and 5B, an anode tab connection plate 17a and a cathode tab connection plate 17b each have two electrode terminals 2a and 2b mounted thereon. As shown in Fig. 5C, the tab connection plates 17a, 17b are integrally molded using resin into a sealing plate 12. On the upper surface of the sealing plate 12, the anode electrode terminals 2a and the cathode electrode terminals 2b are alternately projected in a slightly dislocated manner.

On the lower surface of the sealing plate 12, the anode tab connection plate 17a and the cathode tab connection plate 17b are exposed with a partition plate 18 put in-between. In the connection with an electric device 3, in the same manner as the first embodiment, a broad plate-formed anode power wiring 4a and a cathode power wiring 4b are used so as to sandwich the insulating sheet 13 in-between. According to this embodiment, since the currents flowing through almost all the areas on the power wirings overlap except for a limited area between the electrode terminal 2b and the cathode power wiring 4b near the capacitor connection area, a significant reduction of the inductance of the power wiring 4 can be realized. In this embodiment, in the same manner as in the first embodiment, it is possible to expand the degree of bringing the electrode terminals 2 close in comparison with the case in Fig. 2B. In other words, in the second embodiment, it is possible to prevent increase of the current density in the electrode terminals because plural electrode terminals are used, and the diameter of the electrode terminals can be thinned. Accordingly, the electrode terminals can be placed sufficiently adjacently.

Fourth Embodiment

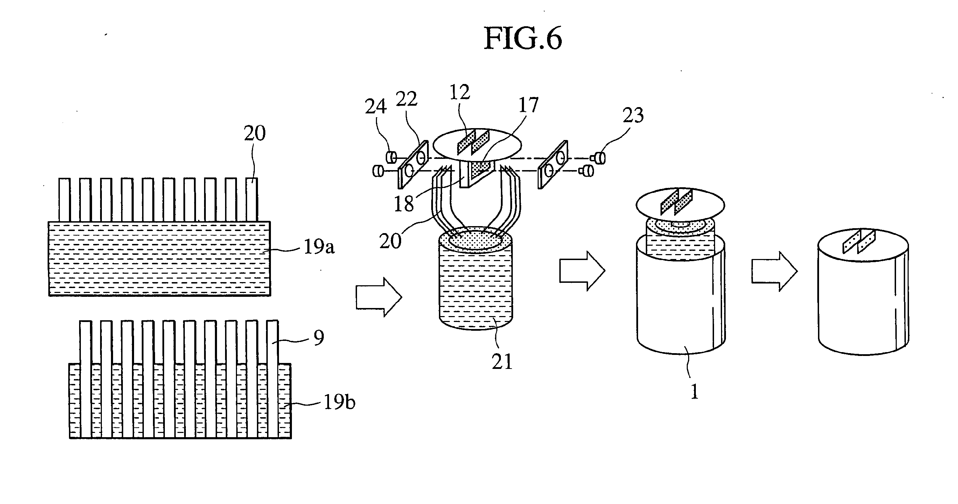

A fourth embodiment of this invention will be described with Fig. 6. An anode foil 19a and a cathode foil 19b each have conductive foil folder tabs 20 stuck thereon in a manner that the upper parts of the tabs 20 protrude, and then electrolyte layers are put in-between and wound in a roll to form a winding 21. The upper parts of the folder tabs 20 that protrude from the anode foil 19a and the cathode foil 19b are separately bundled. As described in the third embodiment, the non-molded exposed portions of anode and cathode tab connection plates 17a and 17b are provided on the lower surface of a sealing plate 12, and on both sides of the partition plate 18. The bundled folder tabs 20 are connected to these exposed portions, and are fastened by tightening stops 22 with bolts 23 and nuts 24. The winding 21 is housed in the case 1, which is sealed by the sealing plate 12, and the electrolytic capacitor is completed. According to this embodiment, even if the electrode terminals 2 are placed adjacently on the upper surface of the sealing plate 12, the folder tabs 20 can easily be mounted, and the manufacturing process becomes simple, which makes it possible to provide a low-cost and high-performance electrolytic capacitor.

Fifth Embodiment

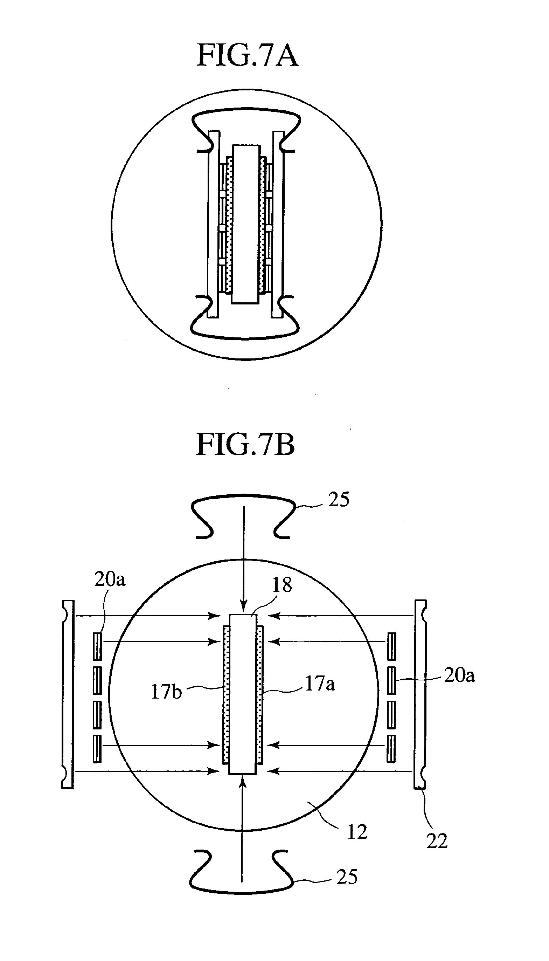

A fifth embodiment of this invention will be described with Figs. 7A and 7B. When the folder tabs 20 are connected to the tab connection plates 17 on the lower surface of the sealing plate 12 in the fourth embodiment, tightening the stops 22 with the bolts 23 and the nuts 24 fastens the folder tabs 20. In this embodiment, the folder tabs 20 are pressed to the tab connection plates 17 on both sides of the partition plate 18 by the stops 22, and then fixed under pressure by spring clips 25, thereby eliminating the thread fastening work and still more improving the workability.

Sixth Embodiment

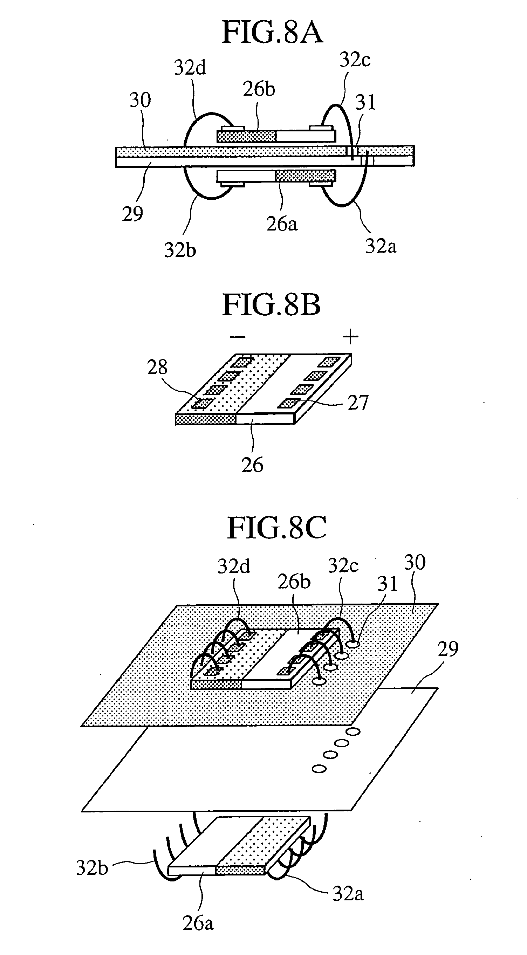

A sixth embodiment of this invention will be described with Fig. 8A to 8C. A chip capacitor 26 has anode electrode pads 27 and cathode electrode pads 28 arranged along the facing sides on the upper surface thereof. A printed board has an anode side 29 and a cathode side 30 that are composed of a conductive plate, which are bonded as a solid plane. The anode side 29 and cathode side 30 each have the same number of via holes 31 as that of the anode electrode pads 27 and cathode electrode pads 28 on the upper side of the chip capacitor 26. The via holes are adjacently provided and connected to the opposite side. A first chip capacitor 26a and a second chip capacitor 26b are pasted each at the same positions on the anode side 29 and the cathode side 30 of the printed board. The first chip capacitor 26a is connected directly to the anode side 29, but through the via holes 31 to the cathode side 30 of the printed board. In the same manner, the second chip capacitor 26b is connected directly to the cathode side 30, but through the via holes 31 to the anode side 29 of the printed board. A first current running through the first chip capacitor 26a flows through a wire lead 32b, the first chip capacitor 26a, a wire lead 32a, and the cathode side 30 of the printed board in this order. A second current running through the second chip capacitor 26b flows through the anode side 29 of the printed board, a wire lead 32c, the second chip capacitor 26b, and a wire lead 32d in this order. Owing to this method, the first current running through the first chip capacitor 26a and the second current running through the second chip capacitor 26b run in the opposite direction and overlap in the vertical direction to the printed board; therefore, a sharp reduction of the inductance becomes possible.

Seventh Embodiment

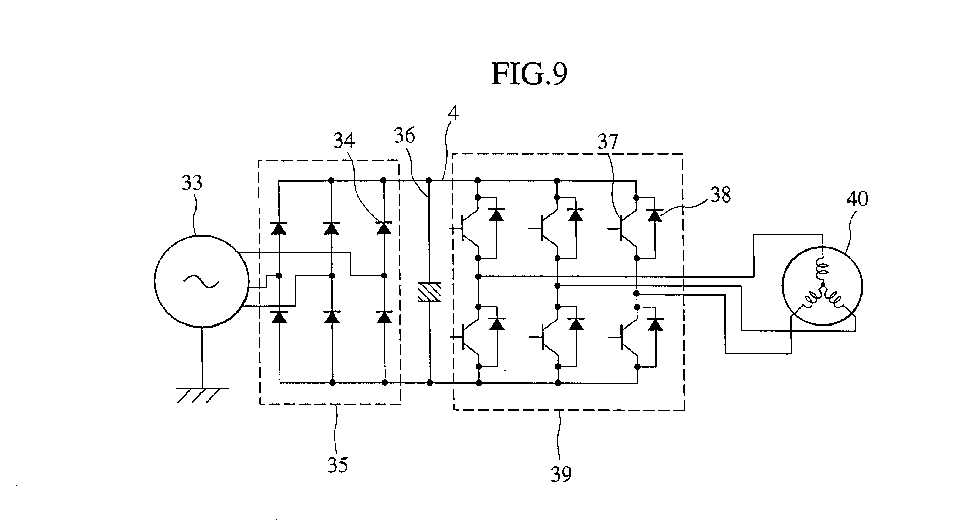

A seventh embodiment in which this invention is applied to a dc/ac inverter will be described. Fig. 9 illustrates three-phase two-level IGBT inverter. The alternate power supplied from a commercial ac power source 33, after passing through a diode rectifier 35 using a rectifying diode 34, is stored in an electrolytic capacitor 36 as a dc power. And, the dc power is again inverted into an ac power of a variable frequency by means of a dc/ac inverter 39 using an IGBT 37 and a freewheeling diode 38, thus driving an ac motor 40. If the inductance of a power wiring 4 that connects the electrolytic capacitor 36 to the dc/ac inverter 39 is large, a high surge voltage is applied to the IGBT 37 during the off operation of the IGBT 37, which possibly gives a risk that destroys the IGBT 37. The use of the electrolytic capacitor 36 of the present invention will suppress the surge voltage to prevent destruction of the device.

Eighth Embodiment

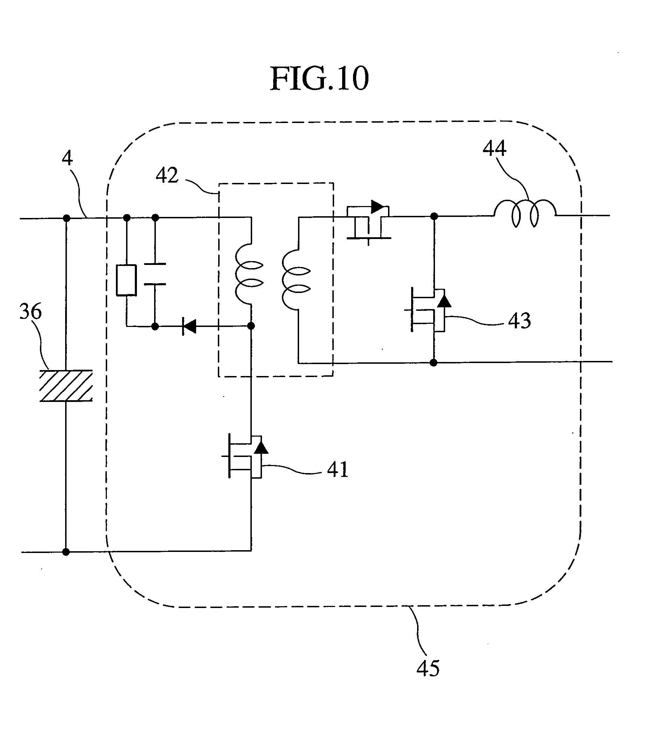

An eighth embodiment in which this invention is applied to a switching power supply will be described. Fig. 10 illustrates a switching power supply using one-transistor forward converter. A high-voltage dc power stored in the electrolytic capacitor 36 is converted into a pulse current by turning on and off a MOSFET 41 on the primary side, which is supplied to the primary side of a high frequency transformer **42**. Then, a low-voltage pulse is generated on the secondary side of the high frequency transformer **42**. The high-voltage dc power is converted into a low-voltage dc power by rectifying a current flowing through the secondary side by the pulse voltage generated by means of a MOSFET **43** on the secondary side and a reactor **44**. In this time, if the inductance of the power wiring 4 that connects the electrolytic capacitor 36 to the switching power supply **45** is high, the high frequency characteristics are deteriorated. The use of the electrolytic capacitor 36 of this invention will improve the frequency characteristic.

Ninth Embodiment

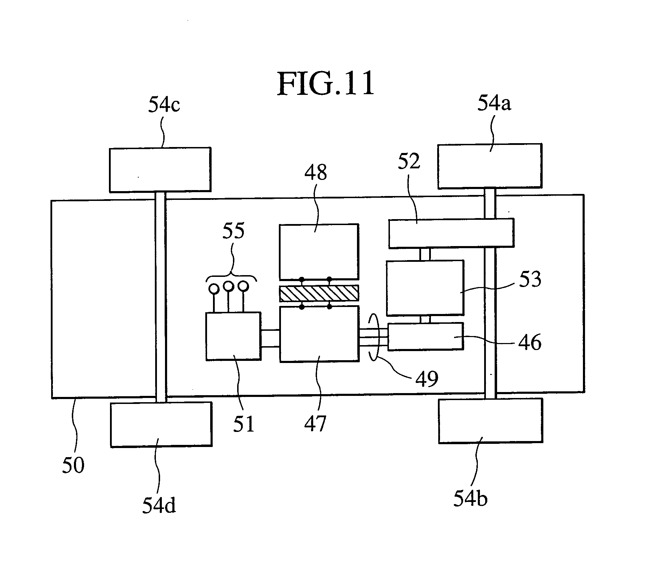

A ninth embodiment in which this invention is applied to a vehicle will be described. Fig. 11 illustrates a construction of a drive system in a vehicle. In Fig. 11, reference numeral 46 denotes a motor, 47 a power conversion device; **48** a dc power supply; 36 the electrolytic capacitor; **49** an output wiring; 50 the vehicle; 51 a control device; 52 a transmission gear; 53 an engine; **54a**, **54b**, **54c**, **54d** a wheel; and 55 a signal terminal. The signal terminal 55 receives signals relating to the driving state of the vehicle, and the commands from the driver, such as start, acceleration, deceleration, stop, etc. The control device 51 transmits a control signal to the power conversion device 47 on the basis of information received from the signal terminal 55, and drives the motor 46 by the power from the dc power supply **48**. The motor 46 transfers the torque to the engine shaft, and is able to drive the wheels through the transmission gear 52. That is, the drive system in Fig. 11 allows the motor 46 to drive the wheels 54a through 54d when the engine 53 is in stop, and also to assist a torque when the engine 53 is operative. It is also possible to make the engine 53 drive the motor 46, and to convert an ac power generated by the motor 46 into a dc power by means of the power conversion device 47 to thereby charge the dc power into the dc power supply 48. The electrolytic capacitor 36 is disposed between the dc power supply **48** and the power conversion device 47, whereby the power is stored temporarily to increase the capacity of the dc power supply 48 apparently and to improve the transient response of the dc power supply **48**.

In the drive system in Fig. 11, since a high torque is required during driving the wheels only by the motor 46 or assisting the torque, and the dc power supply is a low-voltage power supply such as a storage battery, the motor 46 has to be driven by a low-voltage high-current power. Accordingly, it is essential that the power conversion device **47** adopts a semiconductor device of a low resistance that dissipates little power in a high current. However, the semiconductor device of a low resistance is vulnerable to a surge excessive voltage, and an efficient power conversion device has to provide a surge voltage suppression mechanism. The adoption of the electrolytic capacitor 36 of this invention will suppress the surge voltage, which makes it possible to provide a vehicle having a high-efficient drive system.

The invention achieves an electrolytic capacitor having an excellent frequency response, which enables to suppress a surge voltage.

While the invention has been described in its embodiments, it is to be understood that the words which have been used are words of description rather than limitation and that changes within the purview of the appended claims may be made without departing from the true scope and spirit of the invention its broader aspects.

**Claims**

**1.** A capacitor comprising:

an anode foil (19a) and a cathode foil (19b);
an electrolyte layer placed between the anode foil and the cathode foil;
a case (1) that houses the anode foil, the cathode foil, and the electrolyte layer;
an anode terminal 2a and a cathode terminal 2b that are attached on the outside of the case;
at least one tab 17a, 17b, 20 that connects each of the anode foil and the cathode foil to the anode terminal and the cathode terminal; and
power wirings (4a, 4b) that are connected to the anode terminal and the cathode terminal;

wherein flat plates are used for the power wirings, the flat plates being placed in parallel.

**2.** A capacitor comprising:

an anode layer (19a) and a cathode layer (19b);
a dielectric layer placed between the anode layer and, the cathode layer;
a case (1) that houses the anode layer, the cathode layer, and the dielectric layer;
an anode terminal (2a) and a cathode terminal (2b) that are attached on the outside of the case;
at least one tab (17a, 17b, 20) that connects each of the anode layer and the cathode layer to the anode terminal and
the cathode terminal; and
power wirings (4a, 4b) that are connected to the anode terminal and the cathode terminal;

wherein flat plates are used for the power wirings, the flat plates being placed in parallel.

**3.** The capacitor as claimed in Claim 1, wherein the flat plates are used for the anode terminal and the cathode terminal.

**4.** The capacitor as claimed in Claim 3, wherein the anode terminal and the cathode terminal are placed in parallel.

**5.** A capacitor comprising:

an anode foil (19a) and a cathode foil (19b);
an electrolyte layer placed between the anode foil and the cathode foil;
a case (1) that houses the anode foil, the cathode foil, and the electrolyte layer;
a pair of anode terminals (2a) and a pair of cathode terminals (2b) that are attached on the outside of the case;
at least one tab (17a, 17b) that connects each of the anode foil and the cathode foil to the anode terminals and the cathode terminals; and
power wirings (4a, 4b) that are connected to the anode terminal and the cathode terminal;

wherein the pairs of terminals are placed alternately in reverse direction, and the flat plates are used for the power wirings.

6. The capacitor as claimed in Claim 5, wherein the capacitor is used in the number of a plurality of pieces.

7. A capacitor comprising:

an anode layer (19a) and a cathode layer (19b);
a dielectric layer placed between the anode layer and the cathode layer;
a case (1) that houses the anode layer, the cathode layer, and the dielectric layer;
a pair of anode terminals (2a) and a pair of cathode terminals (2b) that are attached on the outside of the case;
at least one tab (17a, 17b, 20) that connects each of the anode layer and the cathode layer to the anode terminals and the cathode terminals; and
power wirings (4a, 4b) that are connected to the anode terminal and the cathode terminal;

wherein the pairs of terminals are placed alternately in reverse direction, and the flat plates are used for the power wirings.

8. The capacitor as Claimed in Claim 7, wherein the capacitor is used in the number of a plurality of pieces.

9. The electronic device comprising:

a first conductive plate (29) on which a first capacitor (26b) is placed;
a second conductive plate (30) on which a second capacitor (26) is placed;
a first lead wire (32c) that connects the first conductive plate and the second capacitor; and
a second lead wire (32a) that connects the second conductive plate to the first capacitor.

10. The electronic device as claimed in Claim 9, wherein the first capacitor and the second capacitor are placed in a manner that the polarities thereof are set reverse.

11. A do/ac inverter using a capacitor set forth in any of Claim 1.

12. A switching power supply using a capacitor set forth in any of Claim 1 through Claim 10.

13. An electric device using a capacitor set forth in-any of Claim 1.

14. A vehicle using a capacitor set forth in any of Claim 1.

15. A do/ac inverter using a capacitor set forth in any of Claim 2.

16. A switching power supply using a capacitor set forth in any of Claim 2.

17. An electric.device using a capacitor set forth in any of Claim 2.

18. A vehicle using a capacitor set forth in any of Claim 2.

# FIG.1A

# FIG.1B

## FIG.2A

## FIG.2B

# FIG.3

# FIG.4A

14    4a
13
2a
12    2b

# FIG.4B

14
16    4a
15    13
4b
12    2a
2b

# FIG.5A

# FIG.5B

# FIG.5C

# FIG.6

EP 1 339 077 A2

# FIG.7A

# FIG.7B

# FIG.8A

# FIG.8B

# FIG.8C

FIG.9

# FIG.10

FIG.11